# EUROPEAN PATENT SPECIFICATION

(11) **EP 2 419 912 B1**
(45) Date of publication and mention of the grant of the patent: **12.06.2013**
(21) Application number: 10713830.7
(22) Date of filing: 01.04.2010
(51) Int. Cl.: H01G 9/20

(54) **Method for the manufacturing of a photovoltaic device**
Verfahren zur Herstellung einer Photovoltaikvorrichtung
Procédé de fabrication d'un dispositif photovoltaïque

(30) Priority: 10.04.2009 EP 09005268
(43) Date of publication of application: 22.02.2012
(73) Proprietor: Tata Steel UK Limited, London SW1P 4WY (GB)
(72) Inventor: WATSON, Trystan Martyn, Swansea SA5 7HR (GB); MABBETT, Ian, Plymouth PL9 9LW (GB); WORSLEY, David Anthony, Carmarthen SA32 7TQ (GB)
(74) Representative: Kruit, Jan
(86) International application number: PCT/EP2010/002106
(87) International publication number: WO 2010/115584

(56) References cited:
- EP-A- 1 244 168
- EP-A- 1 550 742
- US-A1- 2002 015 881

## Description

The invention relates to a method of manufacturing a working electrode for use in a dye sensitised solar cell (DSC) according to the preamble of claim 1.

Dye sensitised solar cells (DSCs) typically consist of a working electrode and a counter electrode. The working electrode comprises a conductive substrate coated with a semiconductive nanoparticulate metal oxide and a dye adsorbed onto the metal oxide to sensitize it to a larger portion of the solar spectrum. The counter electrode comprises a conductive layer and a catalytic material such as platinum deposited onto the conductive layer. The working electrode and the counter electrode may then be bonded together using sealants and spacers to form a well-defined space in which an electrolyte is housed. The electrolyte is typically an iodine/iodide redox couple in an organic solvent.

A critical step in the manufacture of such DSCs is the deposition of the nanoparticulate metal oxide onto the conductive substrate and exposing it to high temperatures. The metal oxide may be deposited onto the conductive substrate in the form of a paste, the paste comprising the metal oxide, a solvent and optionally a binder and/or optionally organic plasticisers, particle stabilizers and non-ionic surfactants. The paste is then subjected to a heat treatment to remove the solvent and the binder from the paste leaving behind a mesoporous metal oxide layer on top of the conductive substrate. If high enough temperatures are provided, sintering of the metal oxide occurs, which increases the number of interconnections between metal oxide particles ("necking") and consequently the electrical conductivity of the metal oxide. The high surface area associated with the metal oxide in combination with an increase in the number of interconnections between metal oxide particles enables the metal oxide to function as a 'light sponge' once a sensitising dye has been adsorbed onto the metal oxide surface.

In the current state of the art, a convection oven is typically used to remove the solvent and the binder from the paste and to sinter the metal oxide. Using this method, the substrate is typically subjected to a heat treatment for a duration of approximately 30 minutes. However, the use of a convection oven with a heating process of this duration has a substantial impact on the capital and running costs on the DSC manufacture process.

US2002/0015881 A1 discloses that 'firing', i.e. the heating of semiconductor particles at high temperature to manifest electrical conductivity and to remove unnecessary matter from the particle surface, is reached not by high temperature heating, but by irradiating semiconductor particles with infrared light having an absorption at which water molecules have an absorption.

It is an object of this invention to increase the speed and efficiency when removing a binder and a solvent from a paste once the paste has been deposited onto a conductive substrate.

It is another object of this invention to provide a fast and efficient method for removing the solvent and the binder from the paste prior to heating the paste in a convection oven.

It is a further object of this invention to increase the number of interconnections between the metal oxide particles to improve the electrical conductivity of the metal oxide and the overall efficiency of the DSC.

It is an object of this invention to reduce the number of process steps in a DSC manufacture process.

According to a first aspect of the invention there is provided a method of manufacturing a working electrode for use in a dye sensitised solar cell comprising the consecutive steps of:
I. Providing a conductive substrate having a first side and a second side.
II. Depositing a paste comprising a metal oxide, a solvent and optionally a binder onto the first side of the conductive substrate
III. Removing the solvent
IV. Optionally removing the binder
V. Sintering the metal oxide
VI. Sensitising the metal oxide with a dye
wherein removing at least part of the solvent and optionally removing at least part of the binder in a single step and/or sintering the metal oxide is performed using electromagnetic radiation having a wavelength in the range of 200nm to 3000nm, said irradiation causing the substrate to heat up rapidly and transfer the heat to the paste. Advantageously, according to the invention the solvent and optionally the binder are removed from the paste much faster than in a convection oven due to heat being rapidly transferred from the metal substrate to the paste by thermal conduction. Furthermore, binder removal leads to an increase in metal oxide surface area, which enables a higher concentration of dye molecules to be adsorbed to the metal oxide surface. This in turn should increase DSC performance and efficiency. The electromagnetic radiation that is used to remove the solvent and the binder from the paste could also sinter the metal oxide, this could cause necking of the metal oxide particles and increase the electrical conductivity of the metal oxide and overall DSC efficiency.

In a preferred embodiment of the invention at least part of the solvent and optionally at least part of the binder are removed in a first heat treatment using electromagnetic radiation and wherein sintering the metal oxide is achieved in a second heat treatment, preferably using a convection oven. By subjecting the substrate to the first heat treatment at least part of the solvent and optionally at least part of the binder are removed rapidly from the paste. Therefore, the heat energy provided in the second heat treatment is for the purpose of sintering the metal oxide. This should increase the overall speed of the DSC manufacturing process since the temperature required for sintering can be reached over a shorter timescale, due to the absence of at least part of the solvent and at least part of the binder, and the substrate optionally retaining heat from the first heat treatment. In addition, the combination of the first heat treatment and the second heat treatment should reduce energy consumption and ensure that as much binder as possible is removed. The presence of residual binder will decrease the number of interconnections between the metal oxide particles and reduce the capacity for dye adsorption due to a reduction in exposed metal oxide surface area. Both of these effects will lead to a reduction in DSC efficiency.

In another preferred embodiment of the invention at least part of the solvent and optionally at least part of the binder are removed in a second heat treatment, preferably using a convection oven and wherein sintering the metal oxide is achieved in a first heat treatment using electromagnetic radiation. Advantageously, the use of the second heat treatment to remove at least part of the solvent and optionally at least part of the binder from the paste should ensure that the heat provided by the first heat treatment will be for the purpose of sintering the metal oxide. This should increase the number of interconnections between the metal oxide particles and the overall photovoltaic efficiency of the DSC. Furthermore, the overall speed of the DSC manufacturing process should increase since the temperature required for sintering can be reached over a shorter timescale due to the absence of at least part of the solvent and at least part of the binder and the substrate optionally retaining heat from the second heat treatment. Finally, the combination of the second heat treatment and the first heat treatment should ensure that as much binder is removed as possible so that it will not adversely effect dye adsorption onto the metal oxide as mentioned above.

In another preferred embodiment of the invention all of the solvent and optionally all of the binder are removed having the advantage that the surface area of the metal oxide is maximised and the capacity for dye adsorption onto the metal oxide is not adversely effected. The use of the first heat treatment alone should remove the solvent and the binder from the paste and sinter the metal oxide over much shorter period of time than if the second heat treatment was used to perform any of the aforementioned steps.

In another preferred embodiment of the invention the binder used is polyethylene glycol or ethyl cellulose. The porosity of the metal oxide layer is important since the electrolyte containing the redox couple must be able to penetrate the metal oxide. A high porosity is desirable and can be achieved using either polyethylene glycol or ethyl cellulose in the paste. In addition, both binders can be used in screen printable pastes which would allow the invention to be scaled up to an industrial level. Alternatively, both binders can be used in pastes that are deposited onto substrates using gravure printing, coil coating or a doctor blade method. Advantageously, both binders are easily accessible, inexpensive and soluble in a range of low boiling point solvents.

In another preferred embodiment of the invention the solvent used is ethanol, or water, or ethanol and water, or terpineol. The above solvents are relatively low boiling point solvents that can be easily removed from the paste at low temperatures. It is expected that the use of relatively low boiling point solvents will increase both the efficiency of sintering the metal oxide and removing the binder, since heat that is conducted from the substrate to the paste is not unnecessarily wasted in removing higher boiling point solvents for example. The use of the aforementioned solvents which are inexpensive and easily accessible also enables powdery materials such as the metal oxide to be deposited on to the conductive substrate or a conductive coating such as the protective conductive coating in a more manageable fashion.

In another preferred embodiment of the invention the conductive substrate is heated on its second side, or on its first side and preferably on its first side and its second side using electromagnetic radiation. By heating the substrate on its second side the speed in which the substrate is heated may increase since the substrate is able to absorb the maximum amount of electromagnetic radiation available, i.e., the electromagnetic radiation is not absorbed by the paste before it reaches the substrate. However, an advantage of heating the substrate on its first side is that the first side of the substrate, which is in direct contact with the paste or the protective conductive coating will heat up at a slightly faster rate than the bulk because it is closer to the radiation source. Therefore, heat should be transferred to the paste at an increased rate and consequently it should take less time to remove the solvent and the binder from the paste and sinter the metal oxide. Also a proportion of the electromagnetic radiation may be absorbed by components of the paste which would result in more efficient heating. By heating the substrate on its first side it is possible to remove the solvent and the binder and sinter the metal oxide within 13 seconds. Heating the first side may also avoid difficulties associated with incorporating the invention into an industrial manufacturing process. By heating the substrate both on its first side and its second side, the efficiency and speed in which the binder and the solvent are removed from the paste should increase since the substrate absorbs radiation more homogeneously and the intensity of the radiation is greater. Therefore, the substrate will be heated to a higher temperature over a shorter period of time, which should speed up the steps of removing the solvent, removing the binder and sintering the metal oxide.

In another preferred embodiment of the invention the first heat treatment is performed in 5 to 50 seconds and more preferably in 5 to 25 seconds. Advantageously, these shorter time-scales will improve the throughput potential of the manufacturing process and contribute greatly to the scaling potential of the technology. Importantly, the method according to the invention is still able to remove the solvent and the binder from the paste and sinter the metal oxide over a much shorter time period compared to the state-of-the-art, i.e., in seconds rather than many minutes.

In another preferred embodiment of the invention the conductive substrate is a metal substrate, preferably titanium or stainless steel or mild steel, or electro-coated chromium steel (ECCS) or mild steel having a zinc or zinc based coating. Advantageously, metal substrates may be shaped or deformed using processes such as forming operations, metal embossing, coining, engraving, profiling, laser, marking, pressing, machining, mechanical grinding or hydroforming. Also, metal substrates may be surface modified whilst maintaining the desirable bulk properties of the metal substrate. For example, metal substrates may be surface modified with the protective conductive coating by printing, sputter deposition, plasma deposition, chemical vapour deposition (CVD) or physical vapour deposition (PVD) processes, sol-gel, electrochemical (masking) deposition processes or lamination. Metal substrates absorb electromagnetic radiation and are excellent conductors of heat. Titanium possesses an excellent strength to weight ratio and excellent corrosion resistance to the electrolyte, for this reason it is not necessary to provide titanium substrates with a protective conductive coating, with the added benefit that expenditure may be reduced since there is one less process step. In addition, titanium is formable and is able to absorb electromagnetic radiation and conduct heat efficiently. Stainless steel substrates exhibit good corrosion resistance to the electrolyte and reflect photons back towards the dye sensitised metal oxide layer by virtue of its mirrored finish, thus it is expected that DSC efficiency will increase when using such substrates. Stainless steel substrates are also formable, have good electromagnetic absorption, good heat conduction properties and are less expensive than titanium substrates. Mild steel substrates offer yet another alternative to both titanium and stainless steel substrates due to their low material cost. However, despite being formable and absorbing electromagnetic radiation and conducting heat efficiently, mild steel substrates can rust and do not possess good corrosion resistance to the electrolyte. ECCS or mild steel substrates coated with a zinc or zinc based coating are also formable, absorb electromagnetic radiation and can conduct heat efficiently to the paste. However, the electro-coated chromium and the zinc or zinc based coating do not possess good corrosion resistance towards to the electrolyte.

In another preferred embodiment of the invention a protective electrically insulating coating is provided on the conductive substrate. The protective electrically insulating coating may be an organic material such as polyimide, polyamide, polyestersulphones or polyfluorinated polymers, or a mixed organic-inorganic material such as silicone based paints or sol-gels. The protective electrically insulating coating may be applied by roller coating, doctor-blading, spray coating, printing, extrusion and lamination, all of which may be implemented easily into a continuous production line. The protective electrically insulating coating preferably has a temperature resistance in the range of 400°C to 850°C, preferably a temperature resistance in the range of 450°C to 600°C and more preferably a temperature resistance in the range of 450°C to 550°C, since such temperatures are required during subsequent processing steps to remove the binder and/or to sinter the metal oxide. Preferably the protective electrically insulating coating should have a sheet resistance of equal to or below 15 Ohms. The application of the protective electrically insulating coating on a conductive substrate such as stainless steel, mild steel, mild steel having a zinc or zinc based coating or ECCS reduces the reactive degradation of the conductive substrate and prevents undesirable reactions of the iodine and iodide components in the electrolyte, which reduces their ability to facilitate electron transfer.

In another preferred embodiment of the invention a conductive coating is provided on the protective electrically insulating coating. During the manufacture of working electrodes which comprise as the working electrode mild steel or mild steel having a zinc or zinc based coating or ECCS, the protective electrically insulating coating and a conductive coating, which may be an organic conductive coating; the conductive coating may be divided into separate cells by means of mechanical scribing or by laser scribing to afford a series connection of the cells. Advantageously, dividing the conductive coating into separate cells increases the output voltages obtainable since conductive coating resistive losses are minimised. Advantageously, the process described hereinabove allows modules of series connected dye sensitised solar cells to be manufactured in a continuous production line.

In another preferred embodiment of the invention a protective conductive coating is provided on a conductive substrate such as a metal substrate, preferably a titanium substrate and more preferably a stainless steel substrate. The protective conductive coating is preferably provided by electroplating or by sputtering, which may result in the production process becoming discontinuous. The protective conductive coating could be TiN or Ti and should prevent rust, reactive degradation of the metal substrate and prevent the reaction of iodine and iodide components in the electrolyte, which would be detrimental to the DSC efficiency. The protective conductive coating should also be resistant to high temperatures. For example, the protective conductive coating should be resistant to temperatures in the range of 400°C to 600°C that are typically required to remove the binder and temperatures in the range of 450°C to 850°C that are typically required to sinter the metal oxide.

In another preferred embodiment of the invention an ink or a paste comprising metallic particles of silver, copper, aluminium, gold or mixtures thereof is provided on the conductive coating. The metallic ink or paste is preferably deposited in a pattern and preferably deposited in the form of strips. The metallic ink or paste may be provided by means of screen printing, gravure printing or flexographic printing, the paste may then be sintered together with the metal oxide or after the metal oxide has been sintered. Sintering the metallic paste increases the electrical conductivity between the metallic particles and the conductive coating, which in turn reduces the resistive losses of the working electrode.

In another preferred embodiment of the invention the thickness of the metal substrate is in the range of 0.04mm to 1.5 mm and preferably in the range of 0.05mm and 0.5mm. By using thinner metal substrates having a thickness in the range of 0.04 mm and 0.1 mm for example, less energy is needed to heat the metal substrate to the required temperature to remove the solvent, the binder and/or to sinter the metal oxide, thus operating costs may be reduced. However, the use of metal substrates having a thickness in the range of 0.5 mm and 1.5 mm for example, means that the metal substrate will be stronger and more robust due its better mechanical properties.

In another embodiment of the invention the metal oxide is a wide band gap metal oxide such as SnO₂ or ZnO or TiO₂. The deposition and sintering of finely dispersed metal oxides such as SnO₂, ZnO or TiO₂ onto conductive substrates provides a large internal surface area, which may be sensitised with photosensitisers such as organic and inorganic dyes that can absorb visible light and inject excited electrons into a conduction band of the metal oxide. This should in turn increase DSC efficiency. All of the aforementioned metal oxides also have the advantage that they are easy to process and are inexpensive to produce. An advantage of SnO₂ is that it is easier to obtain good particle interconnectivity which will minimise resistive losses and increase the efficiency of the DSC. Furthermore, SnO₂ is easily doped so that it is possible to alter the band gap of the metal oxide and tailor its absorption properties. An advantage of using ZnO is that ZnO nanoparticles are readily available at low material cost. In addition, it is expected that the use of ZnO ordered one dimensional structures such as rods, wires combs and alike may improve DSC efficiency, such structures are currently difficult to grow using metal oxides. However, several advantages are associated with using TiO₂, namely, TiO₂ is readily available, cheap, nontoxic and possesses good stability under visible radiation in solution, and an extremely high surface area suitable for dye adsorption. TiO₂ is also porous enough to allow good penetration by the electrolyte ions, which is essential for effective dye regeneration. Finally, TiO₂ scatters incident photons effectively to increase it's light harvesting efficiency.

In another preferred embodiment of the dry film thickness of the metal oxide is between 3 µm and 50µm, preferably between 5 µm and 25 µm and more preferably between 8 µm and 12 µm. The dry film thickness of a film may be defined as the thickness of the film after the solvent and the binder have been removed and the metal oxide has been sintered. The resulting surface area of the metal oxide layer after sintering is related to the thickness of the dry film, i.e. thicker dry films tend to have larger surface areas whereas the surface area of thinner dry films tends to be lower. It preferable to deposit thicker dry films with a large surface area since metal oxide layers with a large surface area can adsorb an increased concentration of dye molecules which should increase the overall efficiency of the DSC. However, if pastes that are too thick are used prior to sintering the metal oxide in order to maximise dry film thickness, then the resulting dry film may be susceptible to delamination.

In another preferred embodiment of the invention the electromagnetic radiation has a wavelength in the range of 200 nm to 3000nm, or 800 to 1500nm and preferably 800nm to 1000nm. Advantageously, the electromagnetic is able to pass the through the paste and/or the protective conductive coating where it is subsequently absorbed by the conductive substrate. The use of electromagnetic radiation enables the substrate to be heated rapidly and much faster than when using a convection oven. In general, the use of shorter wavelengths, i.e., 800 to 1000nm, increases the rate in which the substrate is heated due to shorter wavelengths having higher energy.

In another embodiment of the invention the electromagnetic radiation has a peak intensity in the range of 800nm to 1000nm, or 900nm to 950nm and preferably 910nm to 930nm. The use of electromagnetic radiation having a peak intensity in any of the aforementioned ranges enables the metal substrate to be heated rapidly.

By using electromagnetic radiation with a peak intensity in the range of 910-930nm the first heat treatment is optimised since the electromagnetic radiation is largely unabsorbed by components of the paste such as the solvent, the binder and the metal oxide. Therefore, the substrate should absorb the maximum amount of radiation available, which should increase the rate in which the solvent and the binder are removed and the metal oxide is sintered.

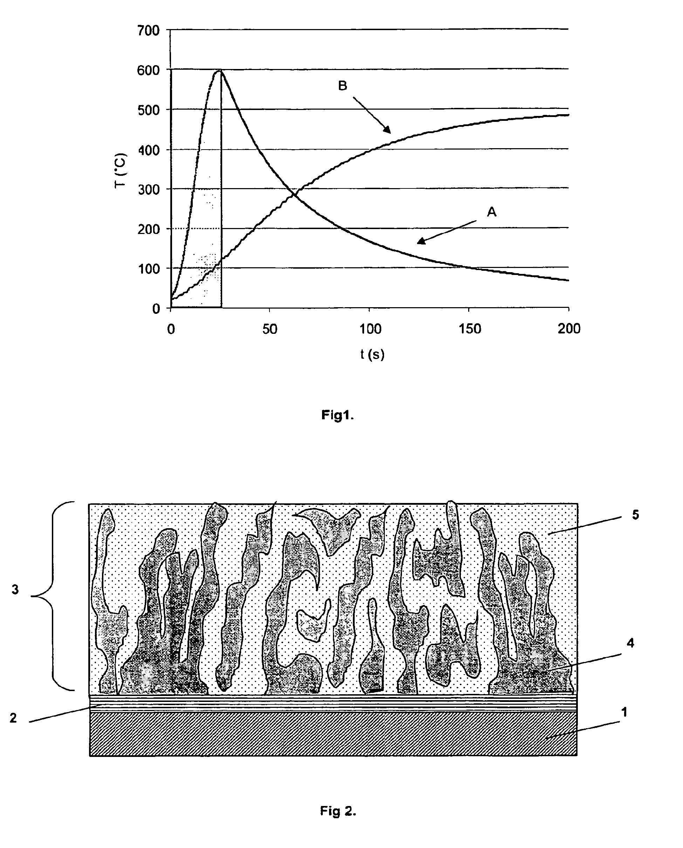

Embodiments of the present invention will now be described by way of example, with references to the figures as described hereunder, wherein
Figure 1. shows the temperature profiles of paste coated titanium substrates heated by means of NIR (line A) and convection oven (line B) heat treatments.
Figure 2. illustrates components of a working electrode according to the invention.

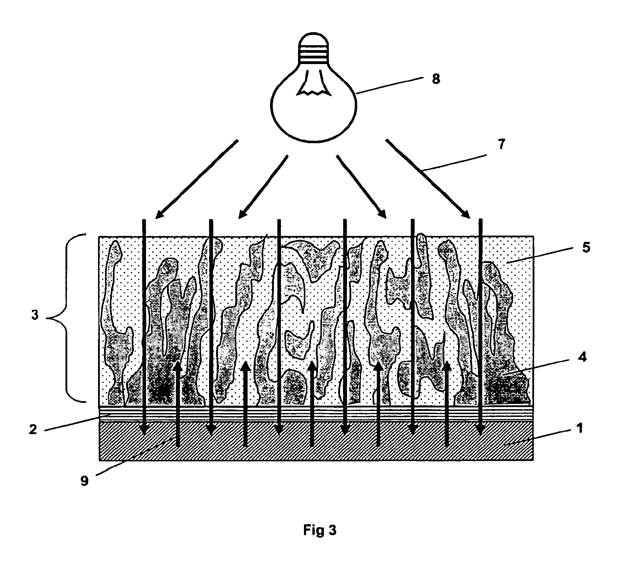

Figure 3. illustrates the heat treatment according to the invention.

In accordance with the invention an underlying conductive substrate 1 such as titanium, stainless steel or mild steel is optionally coated on its first side with a protective conductive coating 2, whereupon a paste 3 comprising a metal oxide 4 such as TiO₂, a binder 5 and a solvent (not shown) is deposited.

The purpose of the protective conductive coating 2 is to protect the metal substrate 1 from an electrolyte solution, which contains both tri-iodide ions and iodine molecules that are capable of oxidising and corroding the metal substrate. The protective conductive coating should also be resistant to high temperatures in the range of 400 to 850°C so that the protective conductive coating does not degrade when exposed to heat during solvent and binder removal and sintering.

The paste 3 is deposited onto the substrate 1 or onto the protective conductive coating 2 in a process such as a doctor blade method. The doctor blade method consists of masking part of the metal substrate with a masking material, depositing the paste onto the masking material at a first end of the substrate and drawing the paste over an exposed part of the metal substrate using a rod to form a thin film. Should the method according to the invention be used on an industrial scale, then the paste can be deposited onto the substrate or the protective conductive coating using screen printing, gravure printing or coil coating. The use of any one of these deposition processes would enable photovoltaic devices to be manufactured in a continuous production line since it is possible to remove at least part of the solvent and optionally at least part of the binder from the paste and sinter the metal oxide within 13 seconds.

Pastes that were used in accordance with the invention were commercially sourced and are shown in Table 1:

**Table 1.Types of commercially available DSC pastes used.**

| **Manufacturer** | **Paste Type** | **TiO₂ particles** | **Binder** | **Solvent** |
|---|---|---|---|---|
| Solaronix | SNX Ti-D | 13-400nm particles | Polyethylene glycol | Ethanol and Water |
| Dyesol | DSL 18NRT | Transparent paste | Ethyl Cellulose | Terpineol |
| Dyesol | DSL 18NR-AO | 350-450nm particles | Ethyl Cellulose | Terpineol |

The substrate **1** coated with the paste **3** is then irradiated with near infrared radiation (NIR) **7** having a wavelength in the range of 800 to 1000nm and having a peak intensity in the range of 910 to 930nm in a first heat treatment. The NIR is provided by an NIR source **8** such as Adphos lamps. The NIR used passes through the paste where it is absorbed by the substrate causing the substrate to heat up rapidly and transfer the heat **9** directly to the paste. The minimum temperature required to remove the binder **5** from a paste such as SNX Ti-D is 400°C, whereas sintering of the metal oxide occurs at a temperature of at least 450°C.

Advantageously, the substrate **1** is able to maintain a temperature of at least 450°C for a period of up to 30 seconds during an air cooling phase directly after the first heat treatment. Thus, it is possible to remove the binder **5** from the paste **3** even after the first heat treatment has finished. Alternatively, the substrate may be quenched using water after the first heat treatment, which could speed up the DSC manufacture process.

The efficiency of NIR 7 absorption and the rate at which the substrate **1** heats up and subsequently transfers the heat **9** to the paste **3** is dependent upon the physical properties of each metal substrate. It is apparent from Table 2 that the use of titanium substrates over stainless steel substrates increases the photovoltaic efficiency of a photovoltaic device, which may be due to better heat transfer and/or lower contact resistance between the titanium substrate and the TiO₂ metal oxide **4.** However, stainless steel is less expensive in comparison and the mirror finish that is characteristic of such substrates will have a positive effect on DSC efficiency since photons will be reflected back towards the dye sensitised metal oxide layer.

**Table 2: The effect of substrate and paste type on photovoltaic efficiency.**

| **Substrate** | **Paste type** | **Approx Thickness (µm)** | **Entry Temp (°C)** | **Exit temp (°C)** | **Efficiency** |
|---|---|---|---|---|---|
| Titanium | SNX Ti-D | 3.3 | 27 | 596 | 2.94 |
| Stainless steel | SNX Ti-D | 3.3 | 31 | 518 | 1.59 |
| Titanium | SNX Ti-D | 6.4 | 28 | 596 | 3.61 |
| Stainless steel | SNX Ti-D | 6.4 | 29 | 626 | 1.99 |
| Titanium | DSL 18NRT | 3.3 | 22 | 600 | 2.97 |
| Stainless steel | DSL 18NRT | 3.3 | 31 | 560 | 2.00 |
| Titanium | DSL 18NR-AO | 3.3 | 25 | 583 | 3.87 |
| Stainless steel | DSL 18NR-AO | 3.3 | 27 | 578 | 2.17 |

Dry pastes are pastes in which all of the solvent is removed prior to subjecting the paste coated substrate to a heat treatment, whereas wet pastes are pastes in which at least part of the solvent is not removed before subjecting the paste to a heat treatment. Both dry pastes and wet pastes may be used in accordance with the invention. For instance, it is possible to dry SNX Ti-D pastes in air within 30 minutes due to the paste containing low boiling point solvents e.g. ethanol (78.4°C) and water (100°C). By drying the paste prior to the first heat treatment it is expected that the efficiency of binder **5** removal will increase since the heat **9** that is conducted by the substrate **1** will be for the purpose of removing the binder and/or sintering the metal oxide **4,** and not for removing the solvent. However, it is expected that the use of wet pastes will increase DSC throughput since the drying step which could last up to 30 minutes would be avoided.

Table 3 shows that DSC efficiencies are comparable for both dry and wet pastes. The high DSC efficiency associated with the wet paste may be due to the solvent absorbing part of the NIR, heating up and contributing to the overall heat **9** experienced by the paste **3.**

**Table 3. The effect of wet and dry pastes on DSC efficiency following the first heat treatment.**

| **Substrate** | **Paste type** | **time (s)** | **Metal oxide film** | **Thickne ss (µm)** | **NIR power setting** | **Entry Temp (°C)** | **Exit temp (°C)** | **Efficiency** |
|---|---|---|---|---|---|---|---|---|
| Titanium | SNX Ti-D | 25 | Dry | 6 | 50% | 28 | 596 | 3.61 |
| Titanium | SNX Ti-D | 25 | Wet | 6 | 50% | 23 | 587 | 3.74 |
| Titanium | SNX Ti-D | 13 | Dry | 6 | 100% | 39 | 870 | 4.22 |
| Titanium | SNX Ti-D | 13 | Wet | 6 | 100% | 25 | 865 | 4.10 |

An increase in the amount of heat experienced by the paste may increase binder **5** removal efficiency and the surface area of the metal oxide **4,** consequently the concentration of dye molecules adsorbed onto the metal oxide should increase as will the overall DSC efficiency.

Metal oxide **4** dry films having larger thicknesses generally leads to an increase in DSC efficiency. As shown in Table 4, it is preferable to obtain metal oxide dry film thickness in the range of 8 µm to 12 µm. However, if pastes that are too thick are used prior to sintering the metal oxide to maximise dry film thickness, then the resulting dry film may be susceptible to delamination, this may be remedied by reducing the line speed to allow the solvent more time to evaporate.

**Table 4: Effect of paste thickness on photovoltaic efficiency.**

| **Substrate** | **Paste type** | **Thickness (µm)** | **Entry Temp (°C)** | **Exit temp (°C)** | **Efficiency** |
|---|---|---|---|---|---|
| Titanium | SNX Ti-D | 3.3 | 27 | 596 | 2.94 |
| Titanium | SNX Ti-D | 6.4 | 28 | 596 | 3.61 |
| Titanium | SNX Ti-D | 9.6 | 25 | 615 | 3.55 |
| Stainless steel | SNX Ti-D | 3.3 | 29 | 575 | 1.78 |
| Stainless steel | SNX Ti-D | 6.4 | 29 | 626 | 1.99 |
| Stainless steel | SNX Ti-D | 9.6 | 30 | 578 | 3.28 |
| Titanium | DSL 18NRT | 7.1 | 22 | 600 | 3.49 |
| Stainless steel | DSL 18NRT | 7.1 | 31 | 560 | 2.13 |
| Titanium | DSL 18NR-AO | 9.9 | 25 | 583 | 3.87 |
| Stainless steel | DSL 18NR-AO | 9.9 | 27 | 578 | 2.17 |

## Claims

1. A method of manufacturing a working electrode for use in a dye sensitised solar cell comprising the consecutive steps of:
I. Providing a conductive substrate (1) having a first side and a second side.
II. Depositing a paste (3) comprising a metal oxide (4), a solvent and optionally a binder (5) onto the first side of the conductive substrate
III. Removing the solvent
IV. Optionally removing the binder (5)
V. Sintering the metal oxide
VI. Sensitising the metal oxide with a dye
**characterized in that** removing at least part of the solvent and optionally removing at least part of the binder in a single step and/or sintering the metal oxide is performed using electromagnetic radiation (7) having a wavelength in the range of 200nm to 3000nm, said irradiation (7) causing the substrate to heat up rapidly and transfer the heat (9) to the paste (3).

2. A method of manufacturing a working electrode according to claim 1 wherein at least part of the solvent and optionally at least part of the binder are removed in a first heat treatment using electromagnetic radiation and wherein sintering the metal oxide is achieved in a second heat treatment, preferably using a convection oven.

3. A method of manufacturing a working electrode according to claim 1 wherein at least part of the solvent and optionally at least part of the binder are removed in a second heat treatment, preferably using a convection oven and wherein sintering the metal oxide is achieved in a first heat treatment using electromagnetic radiation.

4. A method of manufacturing a working electrode according to any one of the preceding claims wherein all of the solvent and optionally all of the binder (5) are removed.

5. A method of manufacturing a working electrode according to any one of the preceding claims wherein the binder (5) used is polyethylene glycol or ethyl cellulose.

6. A method of manufacturing a working electrode according to any one of the preceding claims wherein the solvent used is ethanol, or water, or ethanol and water, or terpineol.

7. A method of manufacturing a working electrode according to claim 1 wherein the conductive substrate (1) is heated on its first side and preferably on its first side and its second side using electromagnetic radiation.

8. A method of manufacturing a working electrode according to any one of the preceding claims wherein the first heat treatment is performed in 5 to 50 seconds and more preferably in 5 to 25 seconds.

9. A method of manufacturing a working electrode according to any one of the preceding claims wherein the conductive substrate (1) is a metal substrate, preferably titanium or stainless steel or mild steel or mild steel having a zinc or zinc based coating or electro-coated chromium steel.

10. A method of manufacturing a working electrode according to any one of the preceding claims wherein a protective electrically insulating coating is provided on the conductive substrate.

11. A method of manufacturing a working electrode according to claim 10 wherein a conductive coating and preferably an organic conductive coating is provided on the protective electrically insulating coating.

12. A method of manufacturing a working electrode according to claim 9 wherein a protective conductive coating (2) is provided on the conductive substrate.

13. A method of manufacturing a working electrode according to claim 11 or claim 12 wherein an ink or a paste comprising metallic particles of silver, copper, aluminium, gold or mixtures thereof is provided on the conductive coating.

14. A method of manufacturing a working electrode according to any one of the preceding claims wherein the thickness of the metal substrate is in the range of 0.04 mm to 1.5 mm and preferably in the range of 0.05 mm to 0.5 mm.

15. A method of manufacturing a working electrode according any one of the preceding claims wherein the metal oxide is a wide band gap metal oxide such as SnO₂ or ZnO or TiO₂.

16. A method of manufacturing a working electrode according to any one of the preceding claims wherein the dry film thickness of the metal oxide is between 3 µm and 50µm, preferably between 5 µm and 25 µm and more preferably between 8 µm and 12 µm.

17. A method of manufacturing a working electrode according to any one of the preceding claims wherein the electromagnetic radiation has a wavelength in the range of 800 to 1500nm and preferably 800nm to 1000nm.

18. A method of manufacturing a working electrode according to any one of the preceding claims wherein the electromagnetic radiation has a peak intensity in the range of 800nm to 1000nm, preferably 900nm to 950nm, more preferably 910nm to 930nm.

## Patentansprüche

1. Verfahren zum Herstellen einer Arbeitselektrode zur Verwendung in einer sensibilisierten Farbstoffsolarzelle, das die folgenden Schritte umfasst:
I. Bereitstellen eines leitfähigen Substrats (1), das eine erste Seite und eine zweite Seite hat.
II. Abscheiden einer Paste (3), die ein Metalloxid (4), ein Lösungsmittel und optional ein Bindemittel (5) auf der ersten Seite des leitfähigen Substrats umfasst.
III. Entfernen des Lösungsmittels
IV. Optional Entfernen des Bindemittels (5)
V. Sintern des Metalloxids
VI. Sensibilisieren des Metalloxids mit einem Farbstoff
**dadurch gekennzeichnet, dass**
das Entfernen von mindestens einem Teil des Lösungsmittels und optional das Entfernen von mindestens einem Teil des Bindemittels in einem einzigen Schritt und/oder Sintern des Metalloxids unter Verwendung elektromagnetischer Strahlung (7) ausgeführt wird, die eine Wellenlänge im Bereich von 200 nm bis 3000 nm hat, wobei die Bestrahlung (7) bewirkt, dass das Substrat sich schnell erwärmt und die Wärme (9) an die Paste (3) abgibt.

2. Verfahren zur Herstellung einer Arbeitselektrode nach Anspruch 1, wobei zumindest ein Teil des Lösungsmittels und optional zumindest ein Teil des Bindemittels in einer ersten Wärmebehandlung unter Verwendung von elektromagnetischer Strahlung entfernt wird und wobei das Sintern des Metalloxids in einer zweiten Wärmebehandlung erreicht wird, vorzugsweise unter Verwendung eines Konvektionsofens.

3. Verfahren zur Herstellung einer Arbeitselektrode nach Anspruch 1, wobei zumindest ein Teil des Lösungsmittels und optional zumindest ein Teil des Bindemittels in einer zweiten Wärmebehandlung unter Verwendung eines Konvektionsofens entfernt wird und wobei das Sintern des Metalloxids in einer ersten Wärmebehandlung unter Verwendung eines Konvektionsofens erreicht wird.

4. Verfahren zum Herstellen einer Arbeitselektrode nach einem der vorherigen Ansprüche, wobei das ganze Lösungsmittel und optional das ganze Bindemittel entfernt wird.

5. Verfahren zum Herstellen einer Arbeitselektrode nach einem der vorherigen Ansprüche, wobei das verwendete Bindemittel (5) Polyethylenglycol oder Ethylcellulose ist.

6. Verfahren zum Herstellen einer Arbeitselektrode nach einem der vorherigen Ansprüche. wobei das verwendete Lösungsmittel Ethanol oder Wasser oder Ethanol und Wasser oder Terpineol ist.

7. Verfahren zum Herstellen einer Arbeitselektrode nach Anspruch 1, wobei das leitfähige Substrat (1) auf seiner ersten Seite und vorzugsweise auf seiner ersten Seite und seiner zweiten Seite unter Verwendung von elektromagnetischer Strahlung erwärmt wird.

8. Verfahren zum Herstellen einer Arbeitselektrode nach einem der vorherigen Ansprüche, wobei die erste Wärmebehandlung in 5 bis 50 Sekunden und vorzugsweise in 5 bis 25 Sekunden ausgeführt wird.

9. Verfahren zum Herstellen einer Arbeitselektrode nach einem der vorherigen Ansprüche, wobei das leitfähige Substrat (1) ein Metallsubstrat ist, vorzugsweise Titan oder Edelstahl oder Baustahl oder Baustahl, der eine zink- oder zinkbasierte Beschichtung hat, oder elektrolytisch veredelter Chromstahl.

10. Verfahren zum Herstellen einer Arbeitselektrode nach einem der vorherigen Ansprüche, wobei eine elektrisch isolierende Schutzbeschichtung auf dem leitfähigen Substrat vorgesehen ist.

11. Verfahren zum Herstellen einer Arbeitselektrode nach Anspruch 10, wobei eine leitfähige Beschichtung und vorzugsweise eine organische leitfähige Beschichtung auf der elektrisch isolierenden Schutzbeschichtung vorgesehen ist.

12. Verfahren zum Herstellen einer Arbeitselektrode nach Anspruch 9, wobei eine leitfähige Schutzbeschichtung (2) auf dem leitfähigen Substrat vorgesehen ist.

13. Verfahren zum Herstellen einer Arbeitselektrode nach Anspruch 11 oder 12, wobei eine Farbe oder eine Paste, die Metallteilchen von Silber, Kupfer, Aluminium, Gold oder Mischungen derselben umfasst, auf der leitfähigen Beschichtung vorgesehen wird.

14. Verfahren zum Herstellen einer Arbeitselektrode nach einem der vorherigen Ansprüche, wobei die Dicke des Metallsubstrats im Bereich von 0,04 mm bis 1,5 mm und vorzugsweise im Bereich von 0,05 mm bis 0,5 mm liegt.

15. Verfahren zum Herstellen einer Arbeitselektrode nach einem der vorherigen Ansprüche, wobei das Metalloxid ein Metalloxid mit weitem Bandabstand ist, wie zum Beispiel SnO₂ oder ZnO oder TiO₂.

16. Verfahren zum Herstellen einer Arbeitselektrode nach einem der vorherigen Ansprüche, wobei die Trockenfilmdicke des Metalloxids zwischen 3 µm und 50 µm, vorzugsweise zwischen 5 µm und 25 µm und am besten zwischen 8 µm und 12 µm liegt.

17. Verfahren zum Herstellen einer Arbeitselektrode nach einem der vorherigen Ansprüche, wobei die elektromagnetische Strahlung eine Wellenlänge im Bereich von 800 bis 1500 nm und vorzugsweise von 800 bis 1000 nm hat.

18. Verfahren zum Herstellen einer Arbeitselektrode nach einem der vorherigen Ansprüche, wobei die elektromagnetische Strahlung eine Peakintensität im Bereich von 800 bis 1000 nm, vorzugsweise von 900 bis 950 nm, am besten von 910 bis 930 nm hat.

## Revendications

1. Procédé de fabrication d'une électrode de travail pour une utilisation dans une cellule solaire sensibilisée avec un colorant comprenant les étapes consécutives consistant à :
I. utiliser un substrat conducteur (1) comprenant un premier côté et un second côté
II. déposer une pâte (3) comprenant un oxyde métallique (4), un solvant et facultativement un liant (5) sur le premier côté du substrat conducteur
III. retirer le solvant
IV. retirer facultativement le liant (5)
V. fritter l'oxyde métallique
VI. sensibiliser l'oxyde métallique avec un colorant
**caractérisé en ce que** le retrait d'au moins une partie du solvant et le retrait facultatif d'au moins une partie du liant dans une seule étape et/ou le frittage de l'oxyde métallique est réalisé en utilisant un rayonnement électromagnétique (7) ayant une longueur d'onde comprise dans la plage allant de 200 nm à 3000 nm, ledit rayonnement (7) entraînant le chauffage rapide du substrat et le transfert de la chaleur (9) à la pâte (3).

2. Procédé de fabrication d'une électrode de travail selon la revendication 1, dans lequel au moins une partie du solvant et facultativement au moins une partie du liant sont retirées dans un premier traitement thermique en utilisant un rayonnement électromagnétique et dans lequel le frittage de l'oxyde métallique est obtenu dans un second traitement thermique, en utilisant de préférence un four à convection.

3. Procédé de fabrication d'une électrode de travail selon la revendication 1, dans lequel au moins une partie du solvant et facultativement au moins une partie du liant sont retirées dans un second traitement thermique en utilisant de préférence un four à convection et dans lequel le frittage de l'oxyde métallique est obtenu dans un premier traitement thermique en utilisant un rayonnement électromagnétique.

4. Procédé de fabrication d'une électrode de travail selon l'une quelconque des revendications précédentes, dans lequel tout le solvant et facultativement tout le liant (5) sont retirés.

5. Procédé de fabrication d'une électrode de travail selon l'une quelconque des revendications précédentes, dans lequel le liant (5) utilisé est le polyéthylène glycol ou l'éthylcellulose.

6. Procédé de fabrication d'une électrode de travail selon l'une quelconque des revendications précédentes, dans lequel le solvant utilisé est l'éthanol ou l'eau, ou l'éthanol et l'eau, ou le terpinéol.

7. Procédé de fabrication d'une électrode de travail selon la revendication 1, dans lequel le substrat conducteur (1) est chauffé sur son premier côté et de préférence sur son premier côté et son second côté en utilisant un rayonnement électromagnétique.

8. Procédé de fabrication d'une électrode de travail selon l'une quelconque des revendications précédentes, dans lequel le premier traitement thermique est réalisé en 5 à 50 secondes et plus préférablement en 5 à 25 secondes.

9. Procédé de fabrication d'une électrode de travail selon l'une quelconque des revendications précédentes, dans lequel le substrat conducteur (1) est un substrat métallique, de préférence le titane ou un acier inoxydable ou un acier doux ou un acier doux ayant un revêtement de zinc ou à base de zinc ou un acier au chrome électrodéposé.

10. Procédé de fabrication d'une électrode de travail selon l'une quelconque des revendications précédentes, dans lequel un revêtement protecteur électriquement isolant est présent sur le substrat conducteur.

11. Procédé de fabrication d'une électrode de travail selon l'une quelconque des revendications précédentes, dans lequel un revêtement conducteur et de préférence un revêtement conducteur organique est présent sur le revêtement protecteur électriquement isolant.

12. Procédé de fabrication d'une électrode de travail selon la revendication 9, dans lequel un revêtement conducteur protecteur (2) est présent sur le substrat conducteur.

13. Procédé de fabrication d'une électrode de travail selon la revendication 11 ou la revendication 12, dans lequel une encre ou un pâte comprenant des particules métalliques d'argent, de cuivre, d'aluminium, d'or ou de mélanges de ceux-ci est présente sur le revêtement conducteur.

14. Procédé de fabrication d'une électrode de travail selon l'une quelconque des revendications précédentes, dans lequel l'épaisseur du substrat métallique est comprise dans la plage allant de 0,04 nm à 1,5 mm et de préférence dans la plage allant de 0,05 mm à 0,5 mm.

15. Procédé de fabrication d'une électrode de travail selon l'une quelconque des revendications précédentes, dans lequel l'oxyde métallique est un oxyde métallique à large bande interdite tel que SnO₂ ou ZnO ou TiO₂.

16. Procédé de fabrication d'une électrode de travail selon l'une quelconque des revendications précédentes, dans lequel l'épaisseur de film sec de l'oxyde métallique est comprise entre 3 µm et 50 µm, de préférence entre 5 µm et 25 µm et plus préférablement entre 8 µm et 12 µm.

17. Procédé de fabrication d'une électrode de travail selon l'une quelconque des revendications précédentes, dans lequel le rayonnement électromagnétique possède une longueur d'onde comprise dans la plage allant de 800 nm à 1500 nm et de préférence de 800 nm à 1000 nm.

18. Procédé de fabrication d'une électrode de travail selon l'une quelconque des revendications précédentes, dans lequel le rayonnement électromagnétique possède une intensité de pic comprise dans la plage allant de 800 nm à 1000 nm, de préférence de 900 nm à 950 nm, plus préférablement de 910 nm à 930 nm.
